# EUROPEAN PATENT SPECIFICATION

(11) **EP 4 620 824 B1**
(45) Date of publication and mention of the grant of the patent: **04.11.2026**
(21) Application number: 23912267.4
(22) Date of filing: 27.12.2023
(51) Int. Cl.: B64D 37/04, B64D 37/30, B64C 1/10

(54) **HYDROGEN AIRCRAFT**
WASSERSTOFFFLUGZEUG
AÉRONEF À HYDROGÈNE

(30) Priority: 27.12.2022 US 202263435412 P
(43) Date of publication of application: 24.09.2025
(73) Proprietor: KAWASAKI JUKOGYO KABUSHIKI KAISHA, Kobe-shi, Hyogo 650-8670 (JP)
(72) Inventor: UENO, Yosuke, Kobe-shi, Hyogo 650-8670 (JP); TOYODA, Takahiro, Kobe-shi, Hyogo 650-8670 (JP); KUMADA, Kenta, Kobe-shi, Hyogo 650-8670 (JP); NOMURA, Kazuki, Kobe-shi, Hyogo 650-8670 (JP); KONDO, Yoshitaka, Kobe-shi, Hyogo 650-8670 (JP)
(74) Representative: Leinweber & Zimmermann
(86) International application number: PCT/JP2023/047008
(87) International publication number: WO 2024/143489

(56) References cited:
- CN-A- 113 978 697
- CN-A- 115 071 951
- CN-A- 115 092 379
- US-A- 3 951 362
- US-A1- 2004 129 836
- US-A1- 2014 339 367
- US-A1- 2014 339 367
- US-B2- 8 210 478
- AIRBUS: "FINAL TECHNICAL REPORT (PUBLISHABLE VERSION) Project funded by the European Community under the 'Competitive a nd Sustainable Growth' Programme", ITALY) SEP DIVISION (FRANCE)THALES AVIONICS SA (FRANCE); SHELL HYDROGEN B.V. (NETHERLANDS), 1 January 1998 (1998-01-01), XP055966985, Retrieved from the Internet <URL:https://www.fzt.haw-hamburg.de/pers/Scholz/dglr/hh/text_2004_02_26_Cryoplane.pdf> [retrieved on 20220930]
- SEECKT K. ET AL: "HYDROGEN POWERED FREIGHTER AIRCRAFT - THE FINAL RESULTS OF THE GREEN FREIGHTER PROJECT", 19 September 2010 (2010-09-19), pages 1 - 13, XP055982925, ISBN: 978-0-9565333-0-2, Retrieved from the Internet <URL:http://www.icas.org/ICAS_ARCHIVE/ICAS2010/PAPERS/228.PDF> [retrieved on 20221118]

## Description

### Technical Field

The present disclosure relates to a hydrogen-powered aircraft that utilizes hydrogen as a fuel.

### Background Art

Hydrogen-powered aircraft that utilize hydrogen as a fuel have been known. Such a hydrogen-powered aircraft is required to include a hydrogen fuel tank storing liquefied hydrogen as a fuel in an airframe.

For instance, an aircraft that includes a hydrogen fuel tank as described in Patent Literature 1 below has been known. The aircraft in Patent Literature 1 includes: a propulsion source including a rocket engine; and a hydrogen fuel tank storing a hydrogen fuel to be supplied to the propulsion source. The hydrogen fuel tank is located in an inner part of a fuselage of an airframe. Specifically, in Patent Literature 1, the hydrogen fuel tank is arranged in a central portion of the fuselage located in the rear of a cabin.

In Patent Literature 1, the hydrogen fuel tank having a heavy weight is arranged in the rear of the cabin. The gravity center of the airframe is closer to the rear due to this arrangement. As a result, a distance from the gravity center to a tail is likely to be shorter. The tail is required to have a larger area to ensure stable operability of the aircraft as the distance is shorter. The larger area of the tail leads to an increase in the weight of the aircraft including the tail. This eventually causes poor fuel efficiency and a reduction in a flight range of the aircraft.

### Citation List

### Patent Literature

Patent Literature 1: Japanese Patent Publication No. 5791055 A hydrogen-powered aircraft according to the preamble of claim 1 is known from Airbus: "Fl-NAL TECHNICAL REPORT (PUBLISHABLE VERSION) Project funded by the European Community under the 'Competitive and Sustainable Growth' Programme". URL: https://www.fzt.haw-hamburg.de/pers/Scholz/dglr/hh/text_2004_02_26_Cryoplane.pdf [retrieved on 2022-09-30] Similar aircrafts are known from Seeckt K. et al: "HYDROGEN-POWERED FREIGHTER AIRCRAFT - THE FINAL RESULTS OF THE GREEN FREIGHTER PROJECT" (URL: http://www.icas.org/ICAS_ARCHIVE/ICAS_ARCHIVE/ICAS2010/PAPERS/22.8.PDF; retrieved on 2022-11-18), US 2014/339376 A1, US 8 210 478 B2 and US 3 951 362 A.

### Summary of Invention

The present disclosure has been accomplished in view of the aforementioned circumstances, and has an object of providing a hydrogen-powered aircraft including a hydrogen fuel tank arranged in such a layout as to contribute to improvement in fuel efficiency and an increase in a flight range.

To solve the disadvantages described above, a hydrogen-powered aircraft according to one aspect of the present disclosure includes: a fuselage extending in a front-rear direction; a tail attached to a rear end of the fuselage; a wing attached to a portion of the fuselage located in front of the tail; an accommodation chamber located in the fuselage to accommodate at least one of passengers or cargos; and a hydrogen fuel tank located in front of the accommodation chamber in the fuselage and storing hydrogen fuel, wherein a cockpit is located between the hydrogen fuel tank and the accommodation chamber in the fuselage.

The present disclosure achieves improved fuel efficiency and an increased flight range of the hydrogen-powered aircraft with the aforementioned layout for the hydrogen fuel tank. Out of the following embodiments, only the second embodiment falls within the scope of protection of claims 1 to 3.

### Brief Description of Drawings

Fig. 1 is a perspective view of a hydrogen-powered aircraft according to a first embodiment of the present disclosure.
Fig. 2 is a longitudinal cross-sectional view of the hydrogen-powered aircraft in Fig. 1.
Fig. 3 is a transverse cross-sectional view of a front portion of the hydrogen-powered aircraft in Fig. 1.
Fig. 4 is a perspective view of a hydrogen-powered aircraft according to a second embodiment of the present disclosure.
Fig. 5 is a longitudinal cross-sectional view of the hydrogen-powered aircraft in Fig. 4.
Fig. 6 is a perspective view of a hydrogen-powered aircraft according to a third embodiment of the present disclosure.
Fig. 7 is a transverse cross-sectional view of the hydrogen-powered aircraft in Fig. 6.
Fig. 8 corresponds to Fig. 7 and illustrates a modification of the third embodiment.
Fig. 9 is a perspective view of a hydrogen-powered aircraft according to a fourth embodiment of the present disclosure.
Fig. 10 is a transverse cross-sectional view of the hydrogen-powered aircraft in Fig. 9.
Fig. 11 corresponds to Fig. 10 and illustrates a modification of the fourth embodiment.

### Description of Embodiments

### (1) First Embodiment

### [Configuration of a hydrogen-powered aircraft]

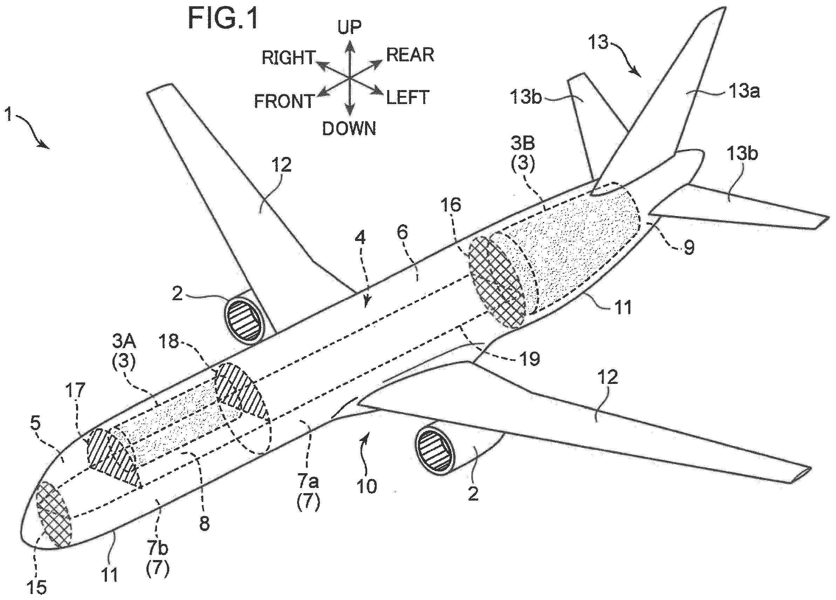

Fig. 1 is a perspective view of a hydrogen-powered aircraft 1 according the first embodiment of the present disclosure. As illustrated in Fig. 1, the hydrogen-powered aircraft 1 includes an airframe 10, an engine 2, and a fuel tank 3. In the embodiment, directions about the hydrogen-powered aircraft 1 are defined as shown in Fig. 1. Specifically, a flight direction of the hydrogen-powered aircraft 1 at flight is defined as "front" or "forward", and an opposite direction to the flight direction is defined as "rear" or "rearward". A left direction from the aircraft oriented in the flight direction is defined as "left" or "leftward", and an opposite direction to the left direction is defined as "right" or "rightward". A direction in which the aircraft faces the ground at arrival is defined as "down" or "downward", the direction being one of directions perpendicularly intersecting a front-rear direction and a left-right direction, and an opposite direction thereto is defined as "up" or "upward". A direction parallel to the left-right direction is also referred to as a width direction. The definitions of these directions are applicable to the second to fourth embodiments to be described later.

The airframe 10 includes a fuselage 11, a pair of left and right wings 12, and a tail 13. The fuselage 11 has a cylindrical shape extending in the front-rear direction, and has, for example, a fuselage panel in a substantially cylindrical shape, and various kinds of reinforcement members each extending in the front-rear direction and a circumferential direction along an inner surface of the panel. Each of the two wings 12 is formed of a plate member which is long in the left-right direction, i.e., in the width direction. Each of the two wings 12 extends outward in the width direction from an intermediate portion of the fuselage 11 in the front-rear direction. The tail 13 is disposed at a position on the fuselage 11 located in the rear of the wings 12. Specifically, the tail 13 includes a vertical tail 13a extending upward from a rear end of the fuselage 11, and a pair of left and right horizontal tail 13b each extending outward in the width direction from the rear end of the fuselage 11.

The engine 2 is driven with hydrogen as a fuel. For instance, the engine 2 is a hydrogen turbine engine including a gas turbine to rotate with combustion energy of the hydrogen. The engine 2 is located outside the airframe 10 and gives a propulsive force to the airframe 10. Although the number of engines 2 is not particularly limited, two engines 2 are fixedly attached to the pair of wings 12 respectively in the embodiment.

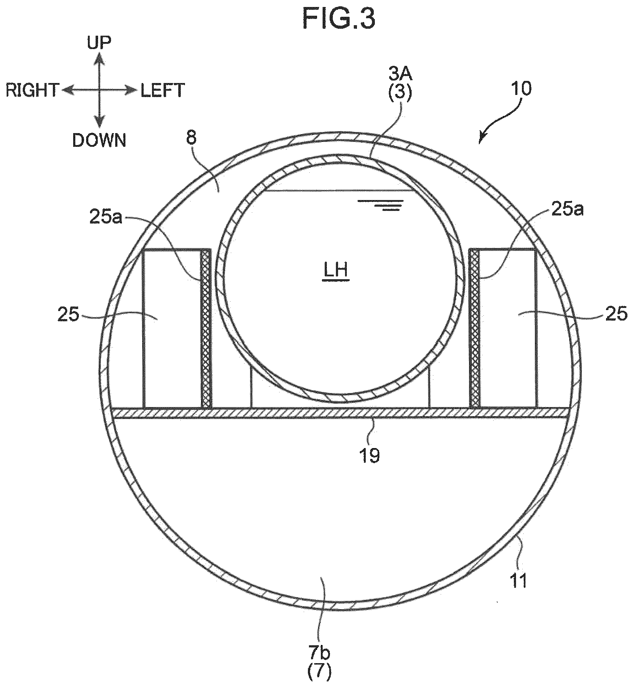

The fuel tank 3 stores hydrogen in the form of liquid to be supplied to each engine 2 as the fuel. Specifically, the fuel tank 3 stores cryogenic liquefied hydrogen LH illustrated in Fig. 3 in the inside thereof. In the embodiment, the fuel tank 3 includes a front tank 3A and a rear tank 3B. Each of the tanks 3A and 3B stores the liquefied hydrogen LH. The front tank 3A corresponds to a hydrogen fuel tank in the disclosure, and the rear tank 3B corresponds to an additional hydrogen fuel tank in the disclosure.

Each of the front tank 3A and the rear tank 3B is connected to the two engines 2 via given fuel pipes. Specifically, the front tank 3A can supply the hydrogen fuel to at least one of the two engines 2 via the associated fuel pipe, and the rear tank 3B can supply the hydrogen fuel to at least one of the two engines 2 via the associated fuel pipe. Each of the fuel pipes for the tanks 3A and 3B is provided with a valve to change a connection destination for the fuel.

Each valve is appropriately controlled depending on a condition of each of the tanks 3A and 3B. For instance, at regular times when both the front tank 3A and the rear tank 3B store sufficient amounts of the hydrogen fuel in the form of the liquefied hydrogen LH, each valve is controlled so that the front tank 3A supplies the hydrogen fuel to one of the engines 2 and the rear tank 3B supplies the hydrogen fuel to the other engine 2. By contrast, in a case where one of the front tank 3A and the rear tank 3B is unavailable due to a malfunction or other defect, each control valve is controlled so that the other tank that works without any defect supplies the hydrogen fuel to the two engines 2.

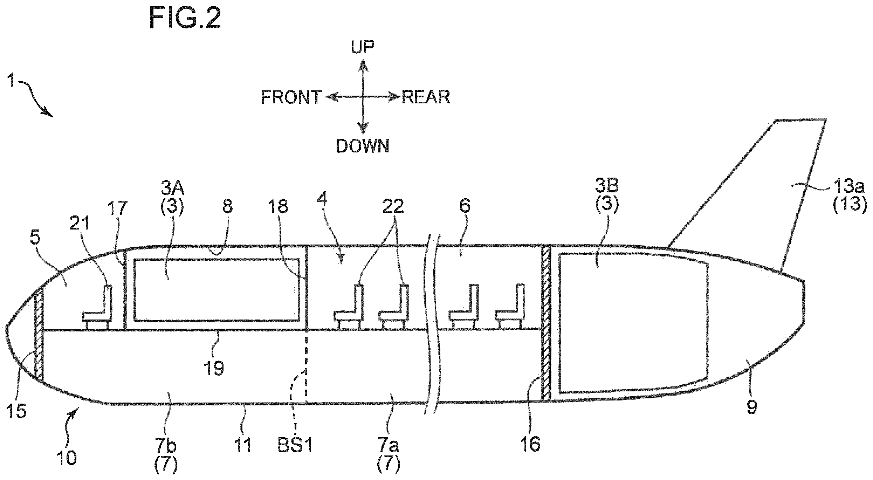

Fig. 2 is a longitudinal cross-sectional view of the hydrogen-powered aircraft 1. As illustrated in Fig. 1 and Fig. 2, the fuselage 11 has an inner part defining an operation compartment 5, a cabin 6, a cargo compartment 7, a front tank chamber 8, and a rear tank chamber 9. The operation compartment 5 is a chamber for a pilot, and is located in the front end of the fuselage 11. The chamber for the pilot is called a cockpit as well. The front tank chamber 8 is a chamber to accommodate the front tank 3A, and is located in the rear of the operation compartment 5. The cabin 6 is a chamber to accommodate passengers, and is located in the rear of the front tank chamber 8. The cargo compartment 7 is a chamber to accommodate cargos, and is located below the operation compartment 5, the front tank chamber 8, and the cabin 6. The rear tank chamber 9 is a chamber to accommodate the rear tank 3B, and is located in a rear potion of the fuselage 11, that is, located in the rear of the cabin 6 and the cargo compartment 7.

The inner part of the fuselage 11 is provided with a first pressure bulkhead 15, a second pressure bulkhead 16, a first partition 17, a second partition 18, and a horizontal wall 19 to define the chambers 5 to 9. Each of the first and second pressure bulkheads 15 and 16, and the first and second partitions 17 and 18 is a vertical wall perpendicularly intersecting the front-rear direction, and divides the inner part of the fuselage 11 in the front-rear direction. The horizontal wall 19 extends in the front-rear direction and divides the inner part of the fuselage 11 in the up-down direction. These walls are arranged in order of the first pressure bulkhead 15, the first partition 17, the second partition 18, and the second pressure bulkhead 16 from the front.

The first pressure bulkhead 15 is a substantially circular wall located in the front end of the fuselage 11, and occupies a whole cross-sectional plane of the fuselage 11 in the front end. The horizontal wall 19 has a front end connected to the first pressure bulkhead 15.

The second pressure bulkhead 16 is a substantially circular wall located in the rear portion of the fuselage 11, and occupies a whole cross-sectional plane of the fuselage 11 in the rear portion. The horizontal wall 19 has a rear end connected to the second pressure bulkhead 16.

A pressure in a region defined between the first pressure bulkhead 15 and the second pressure bulkhead 16 is kept at a value closer to a value of a ground pressure by a suitable pressure regulator during flight of the hydrogen-powered aircraft 1. Specifically, the operation compartment 5, the cabin 6, the cargo compartment 7, and the front tank chamber 8 lying between the first pressure bulkhead 15 and the second pressure bulkhead 16 are located in a pressurized space where pressure is kept substantially constant. Hence, each of the first pressure bulkhead 15 and the second pressure bulkhead 16 receives a differential pressure based on a difference between the pressure in the pressurized space and a pressure in the sky. Both the pressure bulkheads 15 and 16 have sufficiently high stiffness to withstand the differential pressures.

The first partition 17 is a substantially semicircular wall occupying an upper half of a cross-sectional plane of the fuselage 11. The first partition 17 is arranged in an upper region above the horizontal wall 19. The first partition 17 is spaced rearward from the first pressure bulkhead 15.

The second partition 18 is a substantially semicircular wall like the first partition 17. The second partition 18 is spaced rearward from the first partition 17 in the upper region above the horizontal wall 19.

Each of the first partition 17 and the second partition 18 serves as a firewall made of material having fire retardancy. Any material having fire retardancy is selectable from various kinds of materials for the partitions 17 and 18. For instance, such a material for the partitions 17 and 18 is preferably steel or other material having the same fire retardancy (heat resistance) as that of the steel or higher fire retardancy than that of the steel. Further, the first partition 17 and the second partition 18 are located in the pressurized space between the first pressure bulkhead 15 and the second pressure bulkhead 16, that is, located in the space where the pressure is substantially kept constant. The differential pressure that each of the partitions 17 and 18 receives is hence small. From this perspective, the partitions 17 and 18 have lower stiffness than the stiffness of the pressure bulkheads 15 and 16.

The operation compartment 5 is located between the first pressure bulkhead 15 and the first partition 17 and above the horizontal wall 19. In other words, the operation compartment 5 is a chamber having a substantially semicircular shape in cross-section and defined by an upper half of the first pressure bulkhead 15 serving as a front wall, the first partition 17 serving as a rear wall, and the horizontal wall 19 serving as a floor. As illustrated in Fig. 2, a pilot seat 21 for the pilot to sit thereon, and various manipulation devices to be manipulated by the pilot are arranged in the operation compartment 5.

The front tank chamber 8 is located between the first partition 17 and the second partition 18 and above the horizontal wall 19. In other words, the front tank chamber 8 has a substantially semicircular shape in cross-section and defined by the first partition 17 serving as a front wall, the second partition 18 serving as a rear wall, and the horizontal wall 19 serving as a floor.

The front tank 3A is a sealed container that encloses a storage space for the liquefied hydrogen LH illustrated in Fig. 3. Although the shape of the front tank 3A is not particularly limited, the front tank has a substantially cylindrical shape in the embodiment. The front tank 3A is arranged in the front tank chamber 8 with its central axis extending in the front-rear direction.

The cabin 6 is located between the second partition 18 and the second pressure bulkhead 16 and above the horizontal wall 19. In other words, the cabin 6 is a chamber having a substantially semicircular shape in cross-section and defined by the second partition 18 serving as a front wall, an upper half of the second pressure bulkhead 16 serving as the rear wall, and the horizontal wall 19 serving as a floor. In the cabin 6, seats 22 for passengers to sit thereon are arranged as illustrated in Fig. 2.

The rear tank chamber 9 is located in the rear of the second pressure bulkhead 16. In other words, the rear tank chamber 9 is a chamber having a substantially circular shape in cross-section and defined by the second pressure bulkhead 16 serving as a front wall.

The rear tank 3B is a sealed container that encloses a storage space for the liquefied hydrogen LH illustrated in Fig. 3. Although the shape of the rear tank 3B is not particularly limited, the rear tank has a substantially cylindrical shape in the embodiment. The rear tank 3B has a cross-sectional area which is larger than a cross-sectional area of the front tank 3A. The rear tank 3B is arranged in the rear tank chamber 9 with its central axis extending in the front-rear direction.

The cargo compartment 7 is located between the first pressure bulkhead 15 and the second pressure bulkhead 16 and below the horizontal wall 19. In other words, the cargo compartment 7 is a chamber having a substantially semicircular shape in cross-section and defined by a lower half of the first pressure bulkhead 15 serving as a front wall, a lower half of the second pressure bulkhead 16 serving as a rear wall, and the horizontal wall 19 serving as a ceiling.

The cargo compartment 7 includes a main cargo section 7a and a sub cargo section 7b. The main cargo section 7a is located below the cabin 6. The sub cargo section 7b is located in front of the main cargo section 7a and below the operation compartment 5 and the front tank chamber 8. Although any partition, e.g., a wall, may be provided on a boundary BS1 between the main cargo section 7a and the sub cargo section 7b, no partition is provided on the boundary BS1 in the embodiment. That is to say, the main cargo section 7a and the sub cargo section 7b are continuous in the front-rear direction in the embodiment.

The main cargo section 7a and the cabin 6 are adjacent to each other in the up-down direction via the horizontal wall 19, and constitute a chamber having a substantially circular shape in cross-section as a whole. Specifically, in the embodiment, the fuselage 11 has an intermediate portion in the front-rear direction that defines an accommodation chamber 4 including the cabin 6 and the main cargo section 7a in combination and having a substantially circular shape in cross-section. In other words, the accommodation chamber 4 is a chamber having a substantially circular shape in cross-section and located in the intermediate portion of the fuselage 11 in the front-rear direction to accommodate passengers and cargos.

The accommodation chamber 4 is adjacent to the front tank chamber 8 defining an accommodation space for the front tank 3A via the second partition 18. The front tank chamber 8 is adjacent to the operation compartment 5 via the first partition 17. In other words, the front tank chamber 8 is sandwiched between the operation compartment 5 and the accommodation chamber 4 in the front-rear direction. The front tank 3A accommodated in the front tank chamber 8 at this position is thus located in the rear of the operation compartment 5 and in front of the accommodation chamber 4.

The front tank chamber 8 is at the substantially same height position as the operation compartment 5 and the cabin 6 in the fuselage 11, that is, at a height position corresponding to the height of the upper half of the fuselage 11. In other words, the front tank 3A is disposed at a position overlapping with the operation compartment 5 and the accommodation chamber 4 in a front-rear view.

Fig. 3 is a transverse cross-sectional view of a front portion of the hydrogen-powered aircraft 1. As illustrated in Fig. 3, the front tank chamber 8 includes a pair of left and right access passages 25. The access passages 25 extend in the front-rear direction to connect the operation compartment 5 and the cabin 6 of the accommodation chamber 4 to each other, and are respectively provided on left and right sides of the front tank 3A. Each of the access passages 25 has a front end communicating with the operation compartment 5 via an openable and closable door provided in the first partition 17. Each of the access passages 25 has a rear end communicating with the cabin 6 of the accommodation chamber 4 via an openable and closable door provided in the second partition 18.

Each access passage 25 is surrounded by four walls respectively on upper, lower, left, and right sides thereof, and thus has a rectangular shape in cross-section. The side wall that is closer to the center of the airframe 10 among the walls defining the access passage 25 is referred to as an inner wall 25a. The inner wall 25a serves to separate the access passage 25 from the front tank 3A. The inner wall 25a further serves as a firewall made of material having fire retardancy in the same manner as the first partition 17 and the second partition 18. Each of the remaining walls except the inner wall 25a and the horizontal wall 19 among the walls defining the access passage 25 also may serve as a firewall having fire retardancy.

### [Operational effects]

As described heretofore, the hydrogen-powered aircraft 1 according to the first embodiment includes: the fuselage 11 extending in the front-rear direction; the tail 13 attached to the rear end of the fuselage 11; each wing 12 attached to a portion of the fuselage 11 located in front of the tail 13; the accommodation chamber 4 located in the fuselage 11 to accommodate passengers and cargos; the front tank 3A and the rear tank 3B respectively located in front of and in the rear of the accommodation chamber 4 in the fuselage 11 and each storing a hydrogen fuel, i.e., liquefied hydrogen LH. This configuration is advantageous in improving the fuel efficiency and increasing the flight range of the hydrogen-powered aircraft 1.

Specifically, in the first embodiment, the arrangement of the front tank 3A and the rear tank 3B each storing the hydrogen fuel in the inner part of the fuselage 11 ensures a sufficient capacity of each tank, and thus leads to achievement in an increase in a loading amount of the hydrogen fuel. The configuration hence attains a satisfactory flight range even with the hydrogen fuel at a low energy density.

In addition, the front tank 3A and the rear tank 3B are separated from each other respectively in front of and in the rear of the accommodation chamber 4. This arrangement makes it easy to keep good weight balance of the airframe 10. The configuration achieves an increase in the loading amount of the hydrogen fuel and an increase in the flight range of the hydrogen-powered aircraft 1.

Another configuration to ensure an equivalent loading amount (in other words, an equivalent flight range) of the hydrogen fuel may include a fuel tank having a large capacity corresponding to a total of the capacity of the front tank 3A and the capacity of the rear tank 3B in the rear of the accommodation chamber 4, i.e., in the rear tank chamber 9, while excluding the front tank 3A. However, this configuration makes the fuel tank having a heavy weight concentrate in the rear portion of the airframe 10. As a result, the gravity center of the airframe 10 is closer to the rear, and the distance from the tail 13 to the gravity center in the front-rear direction is shorter. The tail 13 is required to have a larger area to ensure stable operability of the hydrogen-powered aircraft 1 as the distance is shorter. This is likely to increase the weight of the airframe 10.

By contrast, in the first embodiment, a fuel tank or the front tank 3A is arranged in front of the accommodation chamber 4. This arrangement allows the gravity center of the airframe 10 to be closer to the front than the aforementioned arrangement of the fuel tank concentrated in the rear portion of the airframe 10. The configuration thus increases the distance from the tail 13 to the gravity center in the front-rear direction, and thus ensures stable operability of the hydrogen-powered aircraft 1 with a smaller area of the tail 13. This results in achievement in a reduction in the weight of the airframe 10 including the tail 13, and improvement in the fuel efficiency and an increase in the flight range of the hydrogen-powered aircraft 1.

In the first embodiment, the front tank 3A is disposed at a position overlapping with the accommodation chamber 4 in the front-rear view. This configuration ensures an enough large cross-sectional area of the front tank 3A to enable loading of a larger amount of the hydrogen fuel.

In the first embodiment, the operation compartment 5 is located in the front end of the fuselage 11, and the front tank 3A is located in the rear of the operation compartment 5 and in front of the accommodation chamber 4. The arrangement of the operation compartment 5 in front of the front tank 3A attains good forward visibility from the operation compartment 5.

In the first embodiment, the first partition 17 having fire retardancy is located between the operation compartment 5 and the front tank 3A, and the second partition 18 having fire retardancy is located between the front tank 3A and the accommodation chamber 4. This configuration makes the first partition 17 separate the operation compartment 5 from the front tank 3A and makes the second partition 18 separate the accommodation chamber 4 from the front tank 3A, and thus ensures high safety of the operation compartment 5 and the accommodation chamber 4. Moreover, each of the partitions 17 and 18 having the fire retardancy further enhances safety of the operation compartment 5 and the accommodation chamber 4 against a fire.

In the first embodiment, the pair of access passages 25 connecting the operation compartment 5 and the accommodation chamber 4 to each other are provided respectively on the left and right sides of the front tank 3A. This configuration enables movement between the operation compartment 5 and the accommodation chamber 4, which are separated from each other by the front tank 3A, through the access passages 25. Owing to the preparation of the two access passages 25, even in a case where one of the access passages 25 has any defect, the other access passage 25 is available to enable the movement between the operation compartment 5 and the accommodation chamber 4.

In the first embodiment, the inner wall 25a being a side wall located closer to the front tank 3A among the walls surrounding each access passage 25 serves as a firewall having fire retardancy. The inner wall 25a having the fire retardancy separates the access passage 25 from the front tank 3A in this manner, and thus can enhance the safety of the access passage 25 against a fire.

### [Modifications]

Although the accommodation chamber 4 including the cabin 6 and the main cargo section 7a located below the cabin is arranged between the front tank 3A and the rear tank 3B in the first embodiment, an arrangement example of the accommodation chamber is not limited to this arrangement. For instance, the accommodation chamber may serve as a mere cabin to accommodate only passengers, or a mere cargo compartment to accommodate only cargos. That is to say, the accommodation chamber may accommodate at least one of passengers or cargos.

Although the pair of access passages 25 are provided respectively on the left and right sides of the front tank 3A to connect the operation compartment 5 and the cabin 6 of the accommodation chamber 4 to each other in the first embodiment, one of the access passages 25 on the left and right sides may be excluded. In other words, one access passage may be solely provided on one of the left and right sides of the front tank 3A. This configuration simplifies the structure about the access passage.

Although each engine 2 formed of a hydrogen turbine engine is used as a propulsion source that gives a propulsive force to the airframe 10 in the first embodiment, any source that produces a propulsive force by utilizing hydrogen is available as an energy source without limitation to the engine. For instance, a fuel cell system may be adopted as the propulsion device. The fuel cell system may include, for example, an electricity generation part that generates electric power through chemical reaction between hydrogen and oxygen, a power storage part that stores the electric power generated in the electricity generation part, and a motor that drives a turbine or a propeller to rotate with the electric power supplied from the power storage part. The hydrogen fuel tank in the disclosure is adoptable as a supply source of supplying hydrogen to the electricity generation part in the fuel cell system.

### (2) Second embodiment

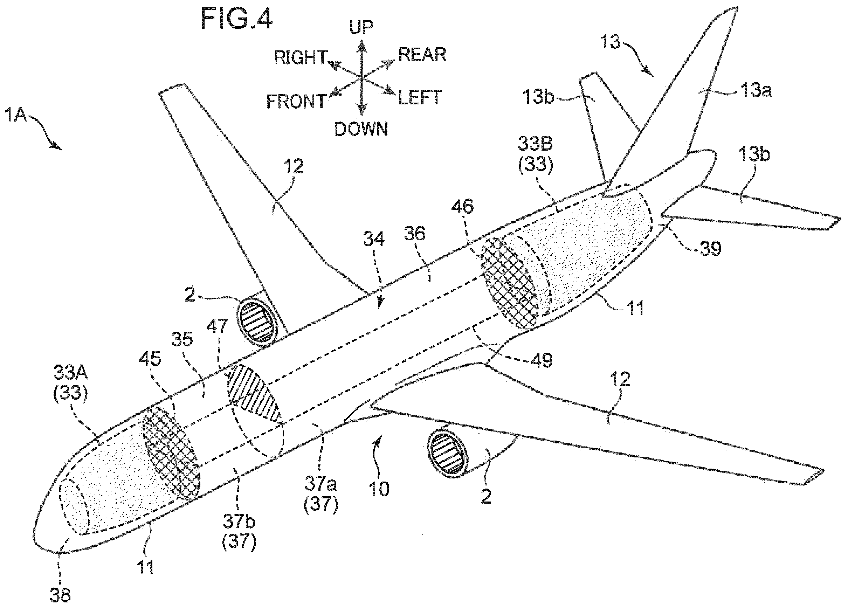

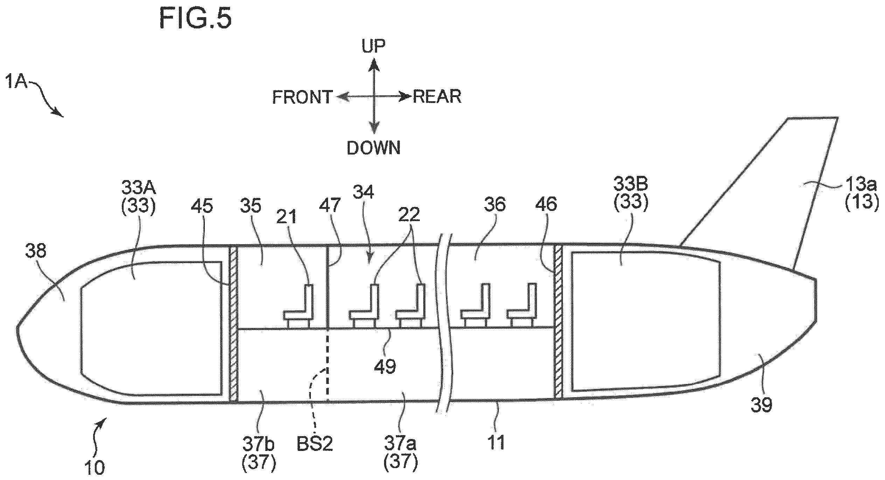

Fig. 4 is a perspective view of a hydrogen-powered aircraft 1A according the second embodiment of the present disclosure, and Fig. 5 is a longitudinal cross-sectional view of the hydrogen-powered aircraft 1A. In the second embodiment, constituent elements which are the same as the constituent elements in the first embodiment are given the same reference numerals or signs, and descriptions therefor will be omitted. Such omission is applied to the third embodiment and the fourth embodiment to be described later.

The hydrogen-powered aircraft 1A according to the second embodiment includes an operation compartment 35, a cabin 36, a cargo compartment 37, a front tank chamber 38, and a rear tank chamber 39 in an inner part of a fuselage 11 of an airframe 10. Further, a fuel tank 33 including a front tank 33A and a rear tank 33B is arranged in the inner part of the fuselage 11. The operation compartment 35, the cabin 36, the cargo compartment 37, the front tank chamber 38, the rear tank chamber 39, and the fuel tank 33 respectively correspond to the operation compartment 5, the cabin 6, the cargo compartment 7, the front tank chamber 8, the rear tank chamber 9, and the fuel tank 3 in the first embodiment. The front tank 33A and the rear tank 33B respectively correspond to the front tank 3A and the rear tank 3B in the first embodiment.

However, the front and rear positional relation between the operation compartment 35 and the front tank chamber 38 in the second embodiment is the reverse of the corresponding positional relation in the first embodiment. Besides, locations of walls to define the chambers 35 to 39 differ from the locations of the walls in the first embodiment. Hereinafter, details will be described.

The inner part of the fuselage 11 is provided with a first pressure bulkhead 45, a second pressure bulkhead 46, a first partition 47, and a horizontal wall 49 to define the chambers 35 to 39. The first pressure bulkhead 45, the second pressure bulkhead 46, the first partition 47, and the horizontal wall 49 respectively correspond to the first pressure bulkhead 15, the second pressure bulkhead 16, the first partition 17, and the horizontal wall 19 in the first embodiment. These walls are arranged in order of the first pressure bulkhead 45, the first partition 47, and the second pressure bulkhead 46 from the front.

The front tank chamber 38 is located in a front end of the fuselage 11. The front tank chamber 38 has a cross-sectional area which is larger than the cross-sectional area of the front tank chamber 8 in the first embodiment. Hence, a cross-sectional area of the front tank 33A accommodated in the front tank chamber 38 is also larger than the cross-sectional area of the front tank 3A in the first embodiment.

The operation compartment 35 is located in the rear of the front tank chamber 38. The operation compartment 35 and the front tank chamber 38 are adjacent to each other in the front-rear direction via the first pressure bulkhead 45.

The cabin 36 is located in the rear of the operation compartment 35. The cabin 36 and the operation compartment 35 are adjacent to each other in the front-rear direction via the partition 47. The partition 47 is provided with an openable and closable door to allow the cabin 36 and the operation compartment 35 to communicate with each other. The partition 47 may serves as a firewall having fire retardancy, or may not serve as such a firewall.

The rear tank chamber 39 is located in a rear portion of the fuselage 11, that is, in the rear of the cabin 36 and the cargo compartment 7. The rear tank chamber 39 and the cabin 36 are adjacent to each other in the front-rear direction via the second pressure bulkhead 46. The rear tank chamber 39 and the cargo compartment 37 are adjacent to each other in the front-rear direction via the second pressure bulkhead 46.

The cargo compartment 37 is located below the operation compartment 35 and the cabin 36. The cargo compartment 37, and the operation compartment 35 and the cabin 36 are adjacent to each other in the up-down direction via the horizontal wall 49.

The cargo compartment 37 includes a main cargo section 37a located below the cabin 36 and a sub cargo section 37b located in front of the main cargo section 37a and below the operation compartment 35. Although no partition, e.g., a wall, is particularly provided on a boundary BS2 between the main cargo section 37a and the sub cargo section 37b as illustrated in Fig. 5, a partition may be provided on the boundary BS2.

The fuselage 11 has an intermediate portion in the front-rear direction that defines the accommodation chamber 34 including the main cargo section 37a and the cabin 36. Specifically, the main cargo section 37a and the cabin 36 are adjacent to each other in the up-down direction via the horizontal wall 49, and constitute an accommodation chamber 34 having a substantially circular shape in cross-section as a whole. In other words, the accommodation chamber 34 is a chamber having a substantially circular shape in cross section and located in the intermediate portion of the fuselage 11 in the front-rear direction to accommodate passengers and cargos.

The accommodation chamber 34 is adjacent to the operation compartment 35 via the partition 47. The operation compartment 35 is adjacent to the front tank chamber 38 via the first pressure bulkhead 45. In other words, the operation compartment 35 is sandwiched between the front tank chamber 38 and the accommodation chamber 34 in the front-rear direction.

As described heretofore, the operation compartment 35 is located between the front tank 33A and the accommodation chamber 34 in the fuselage 11 in the second embodiment. This configuration allows the accommodation chamber 34 and the operation compartment 35 to be close to each other, and thus improves accessibility between the chambers 34 and 35.

However, some countermeasure to attain good forward visibility from the operation compartment 35 may be required in this arrangement of the front tank chamber 38 in front of the operation compartment 35 in the second embodiment. In this case, for example, such countermeasure as to attain the good visibility may include a camera that captures an image of a region including a forward area from the airframe 10, and a monitor arranged in the operation compartment 35 to provide a pilot with the captured image. Alternatively, at least a part of the operation compartment 35 may have a protrusion that protrudes to a higher position than the position of the front tank chamber 38, and the protrusion may be provided with a window.

In the second embodiment, the first pressure bulkhead 45 is located between the front tank 33A and the operation compartment 35, and the second pressure bulkhead 46 is located in the rear of the accommodation chamber 34. This configuration enables collective arrangement of the operation compartment 35 and the accommodation chamber 34 in a pressurized space between the first pressure bulkhead 45 and the second pressure bulkhead 46. The second embodiment further eliminates the need for the partition 18 in the first embodiment, and thus achieves a reduction in the weight of the hydrogen-powered aircraft 1A.

### (3) Third embodiment.

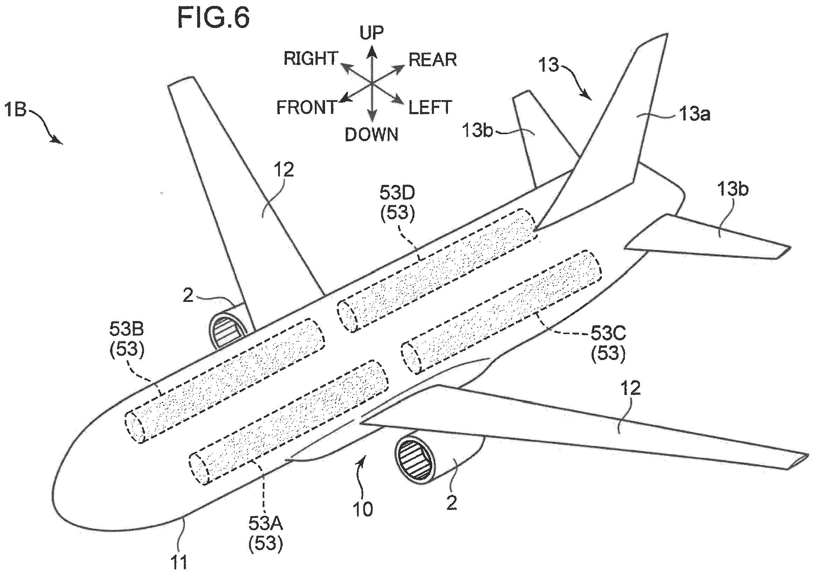

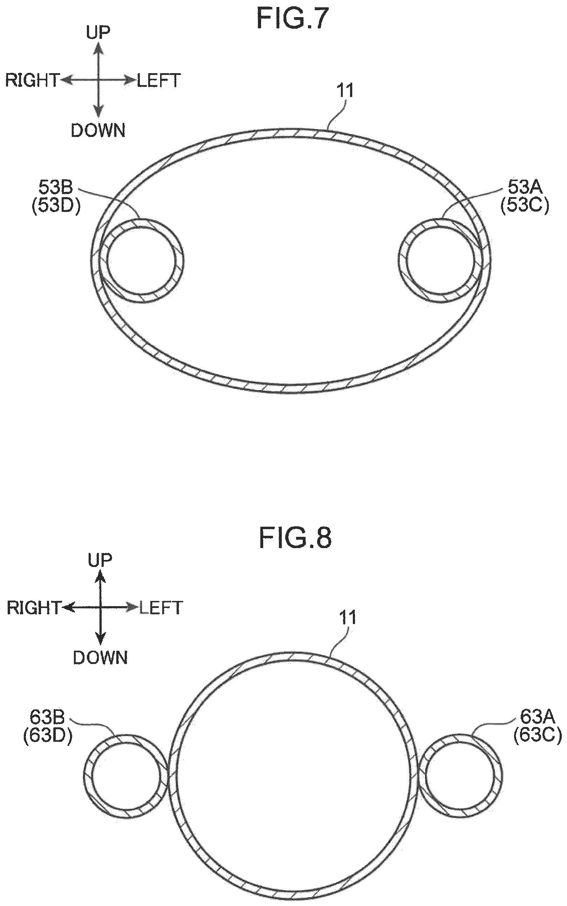

Fig. 6 is a perspective view of a hydrogen-powered aircraft 1B according to the third embodiment the present disclosure, and Fig. 7 is a transverse cross-sectional view of the hydrogen-powered aircraft 1B. The hydrogen-powered aircraft 1B illustrated in Fig. 6 and Fig. 7 includes a hydrogen fuel tank 53 including four tanks 53A to 53D in an inner part of a fuselage 11 of an airframe 10. Specifically, the hydrogen fuel tank 53 includes a first tank 53A at a front left position of the fuselage 11, a second tank 53B at a front right position of the fuselage 11, a third tank 53C at a rear left position of the fuselage 11, and a fourth tank 53D at a rear right position of the fuselage 11. Each of the first to fourth tanks 53A to 53D stores liquefied hydrogen LH as a hydrogen fuel in the same manner as the front tank 3A or the rear tank 3B in the first embodiment.

Each of the first to fourth tanks 53A to 53D has a substantially cylindrical shape extending in the front-rear direction. The first to fourth tanks 53A to 53D are distributed forward, rearward, leftward, and rightward respectively without overlapping in an up-down view. Specifically, the first tank 53A and the second tank 53B are side by side in the left-right direction in a front portion of the fuselage 11. The third tank 53C and the fourth tank 53D are side by side in the left-right direction in a rear potion of the fuselage 11. The first tank 53A and the third tank 53C coaxially align in the front-rear direction. The second tank 53B and the fourth tank 53D coaxially align in the front-rear direction.

As described heretofore, in the third embodiment, arrangement of the four fuel tanks, i.e., the first to fourth tanks 53A to 53D, distributed forward, rearward, leftward, and rightward respectively in the fuselage 11 of the hydrogen-powered aircraft 1B easily keeps good weight balance of the airframe 10.

Owing to the preparation of the four fuel tanks 53A to 53D, even in a case where a part of the fuel tanks malfunctions or has other defect, the remaining fuel tank or fuel tanks are highly likely to continue the supply of the fuel to engines 2 each serving as a propulsion source. This increases good redundancy.

A connection relation between each of the tanks 53A to 53D and each of the two engines 2 can be appropriately set. For example, the two fuel tanks 53A and 53B in the front may be connected to one of the engines 2, and the two fuel tanks 53C and 53D in the rear may be connected to the other engine 2. In this example, either of the two fuel tanks 53A and 53B in the front can supply the fuel to the one engine 2, and either of the two fuel tanks 53C and 53D in the rear can supply the fuel to the other engine 2.

Although the four fuel tanks 53A to 53D are provided in the inner part of the fuselage 11 in the third embodiment, any one of the fuel tanks may be excluded. In other words, three fuel tanks may be provided in the inner part of the fuselage 11.

The three fuel tanks arrangeable in an appropriate layout. For instance, two fuel tanks corresponding to the first tank 53A and the second tank 53B may be arranged in the front portion of the fuselage 11, and the remaining one fuel tank may be arranged in the rear portion of the fuselage 11. In this case, the one fuel tank in the rear portion may be arranged at any one of a left position, a right position, and a central position in the fuselage 11.

Alternatively, two fuel tanks corresponding to the third tank 53C and the fourth tank 53D may be arranged in the rear portion of the fuselage 11, and the remaining one fuel tank may be arranged in the front portion of the fuselage 11. In this case, the one fuel tank in the front portion may be arranged at any one of a left position, a right position, and a central position in the fuselage 11.

Although the four fuel tanks 53A to 53D are arranged in the inner part of the fuselage 11 in the third embodiment, at least one of the fuel tanks may be arranged outside the fuselage 11. Fig. 8 illustrates one example of such outside-arrangement, specifically, illustrates an example where all the four fuel tanks are arranged outside the fuselage 11. Specifically, in the example in Fig. 8, a hydrogen-powered aircraft includes a first tank 63A and a third tank 63C located on a left side of a fuselage 11, and a second tank 63B and a fourth thank 63D located on a right side of the fuselage 11. The first tank 63A and the third tank 63C align in the front-rear direction along a left outer surface of the fuselage 11, and the second tank 63B and the fourth tank 63D align in the front-rear direction along a right outer surface of the fuselage 11. The arrangement of the fuel tanks on the outside of the fuselage 11 easily ensures a larger capacity of an accommodation chamber including at least one of a cabin or a cargo compartment.

### (4) Fourth embodiment

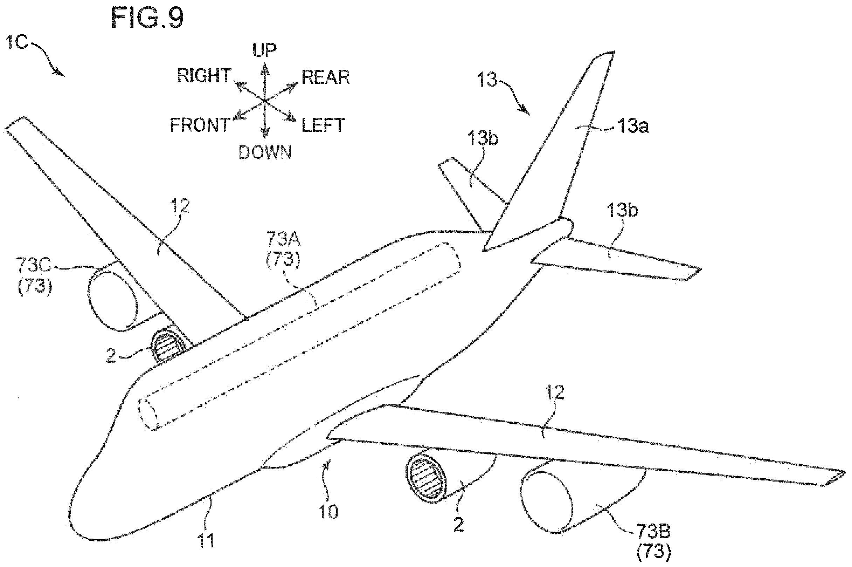

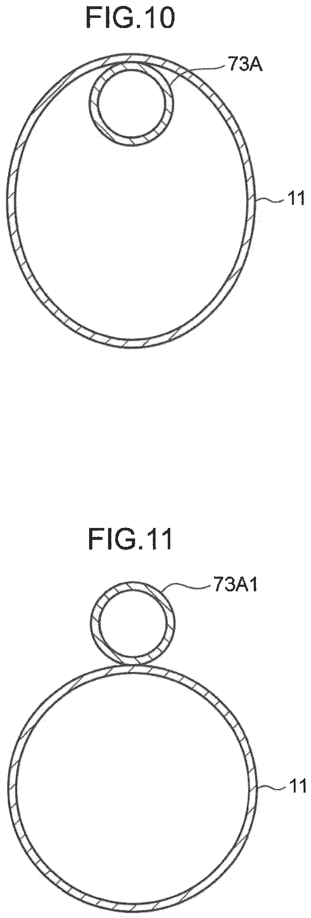

Fig. 9 is a perspective view of a hydrogen-powered aircraft 1C according to the fourth embodiment of the present disclosure, and Fig. 10 is a transverse cross-sectional view of the hydrogen-powered aircraft 1C. The hydrogen-powered aircraft 1C illustrated in Fig. 9 and Fig. 10 includes a hydrogen fuel tank 73 including three tanks 73A to 73C located inside and outside a fuselage 11. Specifically, the hydrogen fuel tank 73 includes an inner fuel tank 73A located in an inner part of the fuselage 11, and a first outer tank 73B and a second outer tank 73C located outside the fuselage 11. Each of the first to third tanks 73A to 73C stores liquefied hydrogen LH as a hydrogen fuel in the same manner as the front tank 3A or the rear tank 3B in the first embodiment.

The inner fuel tank 73A has a substantially cylindrical shape extending in the front-rear direction. The inner fuel tank 73A is arranged in an upper region in the inner part of the fuselage 11 with its central axis extending in the front-rear direction.

Each of the first outer tank 73B and the second outer tank 73C has a substantially short cylindrical shape with an axial dimension which is shorter than an axial dimension of the inner fuel tank 73A. The first outer tank 73B is located under a left wing 12, and the second outer tank 73C is located under a right wing 12. The outer tanks 73B and 73C are detachably attached to the wings 12 respectively.

A pair of left and right engines 2 each serving as a propulsion source are arranged at inner positions than the tanks 73B and 73C respectively in the width direction of the airframe 10. Specifically, the left engine 2 is attached to the left wing 12 between the first outer tank 73B and the fuselage 11, and the right engine 2 is attached to the right wing 12 between the second outer tank 37C and the fuselage 11.

As described heretofore, in the hydrogen-powered aircraft 1C according to the fourth embodiment, the first outer tank 73B and the second outer tank 73C are detachably attached to the wings 12 respectively. This configuration enables easy detachment of the tanks 73B and 73C from the wings 12, and achieves efficient inspection and maintenance of the tanks 73B and 73C. Besides, the tanks 73B and 73C are replaceable with new corresponding tanks each fully storing a fuel after the hydrogen-powered aircraft 1C arrives at a destination, such as an airport. This leads to time saving for replenishment of the fuel. In addition, the arrangement of the tanks 73B and 73C on the outside of the fuselage 11 enhances the safety of the inner part of the fuselage 11.

Although the first outer tank 73B is arranged under the left wing 12 and the second outer tank 73C is arranged under the right wing 12 in the fourth embodiment, the tanks 73B and 73C may be arranged on the tops of the wings 12 respectively.

Although the inner fuel tank 73A is arranged in the upper region in the inner part of the fuselage 11 in the fourth embodiment, a fuel tank 73A1 having a shape similar to the shape of the inner fuel tank 73A may be arranged outside the fuselage 11, for instance, on the top of the fuselage 11 as illustrated in Fig. 11.

### (5) Conclusion

The disclosure covers the following features, whereby only the combination of the first and tenth features, optionally also in combination with the eleventh or twelfth feature, falls within the scope of the claims:

A hydrogen-powered aircraft according to a first feature of the present disclosure includes: a fuselage extending in a front-rear direction; a tail attached to a rear end of the fuselage; a wing attached to a portion of the fuselage located in front of the tail; an accommodation chamber located in the fuselage to accommodate at least one of passengers or cargos; and a hydrogen fuel tank located in front of the accommodation chamber in the fuselage and storing hydrogen fuel.

In the first feature, the arrangement of the hydrogen fuel tank in the fuselage ensures a sufficient capacity of the tank, and thus leads to achievement in an increase in a loading amount of the hydrogen fuel. The configuration hence attains a satisfactory flight range even with the hydrogen fuel at a low energy density.

Further, the airframe has a gravity center being closer to the front and a longer distance from the tail to the gravity center in the front-rear direction in the arrangement of the hydrogen fuel tank having the heavy weight in front of the accommodation chamber than in arrangement of the tank in the rear of the accommodation chamber. This means that the tail can ensure stable operability of the aircraft with a smaller area. The smaller area of the tail leads to a reduction in the weight of the airframe including the tail, and improvement in the fuel efficiency and an increase in the flight range.

In the hydrogen-powered aircraft according to a second feature, in the first feature, the hydrogen fuel tank is disposed at a position overlapping with the accommodation chamber in a front-rear view.

The second feature ensures an enough large cross-sectional area of the hydrogen fuel tank to enable loading of a larger amount of the hydrogen fuel.

The hydrogen-powered aircraft according to a third feature, in the first or second feature, further includes an operation compartment located in the fuselage. The hydrogen fuel tank is located in the rear of the operation compartment and in front of the accommodation chamber.

In the third feature, the arrangement of the operation compartment in front of the hydrogen fuel tank attains good forward visibility from the operation compartment.

The hydrogen-powered aircraft according to a fourth feature, in the third feature, further includes an access passage provided on a side of the hydrogen fuel tank and connecting the operation compartment and the accommodation chamber to each other.

The fourth feature enables movement between the operation compartment and the accommodation chamber, which are separated from each other by the hydrogen fuel tank, through the access passage.

The hydrogen-powered aircraft according to a fifth feature, in the fourth feature, further includes a pair of the access passages respectively provided on left and right sides of the hydrogen fuel tank.

In the fifth feature, even in a case where one of the access passages has any defect, the other access passage is available to enable the movement between the operation compartment and the accommodation chamber.

In the hydrogen-powered aircraft according to a sixth feature, in the fourth feature, the access passage is solely provided on one of left and right sides of the hydrogen fuel tank.

The sixth feature simplifies the structure about the access passage.

The hydrogen-powered aircraft according to a seventh feature, in any one of the third to sixth features, further includes: a first partition located between the operation compartment and the hydrogen fuel tank; and a second partition located between the hydrogen fuel tank and the accommodation chamber.

The seventh feature ensures safety of the operation compartment and the accommodation chamber.

In the hydrogen-powered aircraft according to an eighth feature, in the seventh feature, each of the first partition and the second partition serves as a firewall having fire retardancy.

The eighth feature achieves enhancement of safety of the operation compartment and the accommodation chamber against a fire.

In the hydrogen-powered aircraft according to a ninth feature, in any one of the fourth to sixth features, the access passage is defined by a side wall located closer to the hydrogen fuel tank and serving as a firewall having fire retardancy.

The ninth feature achieves enhancement of safety of the access passage against a fire.

The hydrogen-powered aircraft according to a tenth feature, in the first feature, further includes an operation compartment in the form of a cockpit located between the hydrogen fuel tank and the accommodation chamber in the fuselage.

The tenth feature allows the accommodation chamber and the operation compartment to be close to each other.

The hydrogen-powered aircraft according to an eleventh feature, in the tenth feature, further includes: a first pressure bulkhead located between the hydrogen fuel tank and the operation compartment; and a second pressure bulkhead located in the rear of the accommodation chamber.

The eleventh feature enables collective arrangement of the operation compartment and the accommodation chamber in a pressurized space between the first pressure bulkhead and the second pressure bulkhead.

The hydrogen-powered aircraft according to a twelfth feature, in any one of the first to eleventh features, further includes an additional hydrogen fuel tank located in the rear of the accommodation chamber in the fuselage.

The twelfth feature makes it easy to keep good weight balance of the airframe. The configuration further achieves an increase in the loading amount of the hydrogen fuel and an increase in the flight range of the aircraft.

## Claims

1. A hydrogen-powered aircraft, comprising:
a fuselage (11) extending in a front-rear direction;
a tail (13) attached to a rear end of the fuselage;
a wing (12) attached to a portion of the fuselage located in front of the tail;
an accommodation chamber (34) located in the fuselage to accommodate at least one of passengers or cargos; and
a hydrogen fuel tank (33, 33A) located in front of the accommodation chamber in the fuselage and storing hydrogen fuel,
**characterized by**
a cockpit (35) located between the hydrogen fuel tank (33, 33A) and the accommodation chamber (34) in the fuselage (11).

2. The hydrogen-powered aircraft according to claim 1, further comprising:
a first pressure bulkhead (45) located between the hydrogen fuel tank (33, 33A) and the cockpit (35); and
a second pressure bulkhead (46) located in the rear of the accommodation chamber (34).

3. The hydrogen-powered aircraft according to claim 1 or 2, further comprising
an additional hydrogen fuel tank (33B) located in the rear of the accommodation chamber (34) in the fuselage (11).

## Patentansprüche

1. Wasserstoffbetriebenes Luftfahrzeug, das Folgendes umfasst:
einen Rumpf (11), der sich in einer Vorwärts-Rückwärts-Richtung erstreckt;
ein Leitwerk (13), das an einem hinteren Ende des Rumpfes angebracht ist;
einen Flügel (12), der an einem Abschnitt des Rumpfes angebracht ist, der sich vor dem Leitwerk befindet;
eine Aufnahmekammer (34), die sich im Rumpf befindet, um Passagiere und/oder Fracht aufzunehmen; und
einen Wasserstoffkraftstofftank (33, 33A), der sich vor der Aufnahmekammer im Rumpf befindet und in dem Wasserstoffkraftstoff gespeichert ist,
**gekennzeichnet durch**
ein Cockpit (35), das sich zwischen dem Wasserstoffkraftstofftank (33, 33A) und der Aufnahmekammer (34) im Rumpf (11) befindet.

2. Wasserstoffbetriebenes Luftfahrzeug nach Anspruch 1, das ferner Folgendes umfasst:
ein erstes Druckschott (45), das sich zwischen dem Wasserstoffkraftstofftank (33, 33A) und dem Cockpit (35) befindet; und
ein zweites Druckschott (46), das sich auf der Rückseite der Aufnahmekammer (34) befindet.

3. Wasserstoffbetriebenes Luftfahrzeug nach Anspruch 1 oder 2, ferner umfassend:
einen zusätzlichen Wasserstoffkraftstofftank (33B), das sich auf der Rückseite der Aufnahmekammer (34) im Rumpf (11) befindet.

## Revendications

1. Aéronef à hydrogène, comprenant :
un fuselage (11) s'étendant dans une direction avant-arrière,
une queue (13) rattachée à l'extrémité arrière du fuselage,
une aile (12) rattachée à une portion du fuselage située devant la queue,
une chambre de réception (34) située dans le fuselage et destinée à la réception de passagers et/ou de fret, et
un réservoir de carburant hydrogène (33, 33A) situé devant la chambre de réception, dans le fuselage, et renfermant du carburant hydrogène ;
**caractérisé par**
un poste de pilotage (35) situé entre le réservoir de carburant hydrogène (33, 33A) et la chambre de réception (34), dans le fuselage (11).

2. Aéronef à hydrogène selon la revendication 1, comprenant en outre :
une première cloison étanche (45) située entre le réservoir de carburant hydrogène (33, 33A) et le poste de pilotage (35), et
une deuxième cloison étanche (46) située à l'arrière de la chambre de réception (34).

3. Aéronef à hydrogène selon la revendication 1 ou 2, comprenant en outre :
un réservoir de carburant hydrogène supplémentaire (33B) situé à l'arrière de la chambre de réception (34), dans le fuselage (11).
